# EUROPÄISCHE PATENTANMELDUNG

(11) **EP 1 216 734 A1**
(43) Veröffentlichungstag der Anmeldung: **26.06.2002**
(21) Anmeldenummer: 00811244.3
(22) Anmeldetag: 22.12.2000
(51) Int. Cl.: B01D 9/00

(54) **Verfahren und Kristallisator zur Trennung eines Einsatzgemisches**

(71) Anmelder: Sulzer Chemtech AG, CH-8404 Winterthur (CH)
(72) Erfinder: Kuszlik, Andrzej, 9470 Buchs (CH); Stadler, Ralph, 9470 Buchs (CH); Lippuner, Florian, 9472 Grabs (CH); Engstler, Herbert, 6820 Frastanz (AT)
(74) Vertreter: Hasler, Erich, Dr.

(57) **Zusammenfassung**

In einem vorzugsweise mit die Kristallschicht (33) stabilisierenden, vertikalen und von den Wärmetauschflächen (35) thermisch getrennten Stabilisierungselementen (17a,17a') zwischen den Wärmetauschflächen (35) ausgerüsteten Kristallisator wird ein zu gewinnendes Produkt aus einem den Kristallisator füllenden oder über die Wärmetauscher (13) fliessenden Einsatzgemisch in einer an den Wärmetauschflächen anliegenden Kristallschicht (33) auskristallisiert. Diese Kristallschicht (33) wird anschliessend geschwitzt. Die Wärmetauscher (13) werden dazu über die Schmelztemperatur der in der Kristallschicht (33) verfestigten, zu gewinnenden Substanz erhitzt. Eine Grenzschicht der Kristallschicht (33) wird dabei abgeschmolzen, so dass die Kristallschicht (33) gelöst von den Wärmetauschflächen (35) unabhängig steht. Nun wird die Kristallschicht (33) praktisch lediglich über Strahlungsenergie geschwitzt, weshalb die Temperatur der Wärmetauscher (13) angehoben werden kann.

## Beschreibung

Die Erfindung betrifft ein Verfahren und einen Kristallisator zur Trennung eines Einsatzgemisches aus Substanzen oder Isomeren mit unterschiedlichen Schmelztemperaturen mittels Kristallisation und anschliessendem Schwitzen, welches Einsatzgemisch ein zu gewinnendes Produkt enthält, das auf einer Wärmetauschfläche in einer statisch belastbaren Kristallschicht auskristallisierbar ist.

Viele Substanzen, die bereits eine hohe Reinheit aufweisen, beispielsweise zwischen 97 und 99,9%, neigen dazu, in Form von glasartigen und leicht zerbrechlichen Kristallschichten auszukristallisieren, die statisch belastbar sind. Bei dem der Kristallisation folgenden Schwitzen, in dem die restlichen Verunreinigungen an und innerhalb der Kristallschichten ab- bzw. herausgeschmolzen werden sollen, lösen sich in industriellen Anlagen solche Kristallschichten teilweise von den Wärmetauschflächen, auf denen sie gewachsen sind und kippen in der Folge von den Wärmetauschflächen weg. Dabei zerbrechen sie leicht. Ein grosser Anteil der zerbrochenen Kristallschichten rutscht nach unten ab, wo er wie der von den Wärmetauschflächen lediglich weggekippte Anteil nicht mehr in einem nahen Kontakt mit den Wärmetauschflächen steht. Diese Anteile werden somit im Verlauf des Schwitzens nicht mehr richtig erwärmt. Die Endreinheit des abgerutschten Anteils und auch des lediglich von den Wärmetauschflächen weggekippten Anteils der Kristallschichten liegt in der Folge tiefer als die Endreinheit des an den Wärmetauschflächen verbliebenen und deshalb ausreichend erwärmten Anteils. Dadurch verschlechtert sich die Gesamtreinheit des kristallisierten und geschwitzten Produkts entsprechend gegenüber einer erwarteten Endreinheit. Die Produktereinheit der verschiedenen Chargen unterliegt zudem stochastischen Schwankungen, die auf unterschiedliche Anteile an von den Wärmetauschflächen weggekippten bzw. abgerutschten Kristallschichten zurückzuführen sind.

Um in solchen Fällen ein ausreichendes Schwitzen des gesamten Kristallisats zu ermöglichen, kann die Schwitzzeit verlängert werden. Es muss genügend Zeit für eine verlangsamte Wärmezufuhr zu den nicht mehr an den Wärmetauschflächen anliegenden Kristallschichtfragmenten zur Verfügung gestellt werden. Dies hat den Nachteil verlängerter Chargenzeiten, was bedingt, dass zum Erreichen einer gegebene Jahrestonnage grössere Kristallisatorvolumen installiert werden müssen, als aufgrund von in Laborversuchen ermittelten Daten angenommen werden kann. Um in der ursprünglich vorgesehenen, aufgrund der Laborversuche ermittelten Schwitzzeit eine ausreichende Erwärmung der von Wärmetauschfläche gelösten Kristallschichtanteile zu erreichen, müsste die Schwitztemperatur angehoben werden. Dieses Anheben der Schwitztemperatur ist jedoch nur beschränkt möglich. Eine zu starkes Anheben der Schwitztemperatur hat zur Folge, dass die Temperatur der Wärmetauschflächen zumindest partiell über die Schmelztemperatur der Kristallschicht ansteigt und somit an die Wärmetauschfläche anliegende Kristallschichtanteile abgeschmolzen werden. Weil dadurch die Ausbeute verschlechtert wird, muss auch bei dieser Massnahme das Kristallisatorvolumen angehoben werden, um die vorgesehene Jahrestonnage zu erreichen.

Es ist Aufgabe der Erfindung, ein Verfahren und eine Vorrichtung zur Reinigung von Substanzgemischen bzw. zum Trennen von Isomerengemischen mittels Kristallisation und darauffolgendem Schwitzen vorzuschlagen. Kristallisat, welches in z.B. glasurartigen, spröden Schichten anfällt soll vollständig und durchgehend kontrollierbar geschwitzt werden können. Es soll eine aus oben angeführten Unzulänglichkeiten notwendige Überdimmensionierung von Kristallisationsanlagen vermieden werden können. Auch bei verkürzten Schwitzzeiten soll eine hohe Ausbeute erreicht werden können.

Allgemein gesagt wird bei einem Verfahren zur Trennung eines Einsatzgemisches aus Substanzen oder Isomeren mit unterschiedlichen Schmelztemperaturen das verflüssigte Einsatzgemisch in Berührung gebracht mit einer Wärmetauschfläche, mittels Kühlung der Wärmetauschfläche eine Kristallschicht an der Wärmetauschfläche aus dem Einsatzgemisch auskristallisiert und durch Erwärmen der Wärmetauschfläche wenigstens eine in der Kristallschicht eingeschlossene niedrigerschmelzende Fraktion aus dieser geschwitzt, die niedrigerschmelzende Fraktion ausgeschieden und das nach dem Schwitzen in der Kristallschicht zurückgebliebene, gereinigte höherschmelzende Produkt gewonnen.

Bei einem Verfahren zur Reinigung eines Einsatzgemisches mit wenigstens einer niedrigerschmelzenden Fraktion und einem höherschmelzenden Produkt mittels statischer Kristallisation wird ein mit Wärmetauschflächen bestückter Kristallisator mit dem verflüssigten Einsatzgemisch befüllt. Mittels Kühlung der Wärmetauschfläche wird eine Kristallschicht an der Wärmetauschfläche aus dem Einsatzgemisch auskristallisiert. Durch Erwärmen der Wärmetauschfläche wird die in der Kristallschicht eingeschlossene niedrigerschmelzende Fraktion aus dieser ausgeschwitzt. Die niedrigerschmelzende Fraktion wird ausgeschieden und das nach dem Schwitzen in der Kristallschicht zurückgebliebene, gereinigte Produkt gewonnen.

In einem Fallfilmkristallisator wird das verflüssigte Einsatzgemisch als Rieselfilm mit den Wärmetauschflächen in Berührung gebracht. Aus dem von oben nach unten rieselnden Film setzen sich Kristalle an der Wärmetauschfläche ab. Flüssig verbleibende Fraktionen werden abgelassen, die Kristallschicht durch Erwärmen der Wärmetauschfläche geschwitzt und ausgeschwitzte Fraktionen abgelassen.

Bei einem solchen Verfahren wird die angeführte Aufgabe erfindungsgemäss dadurch gelöst, dass die Kristallschicht derart auskristallisiert wird, dass sie in einem von der Wärmetauschfläche gelösten Zustand eine vertikale, stabile Kristallschicht bildet, und dass die Temperatur der gesamten Wärmetauschfläche beim Schwitzen über die Schmelztemperatur des zu gewinnenden Produkts angehoben wird. Die Wärmetauschflächen müssen dazu senkrechte, in vertikaler Richtung durchgehende Flächen bilden. Ihre in einem Horizontalschnitt sichtbare Form kann hingegen beinahe beliebig sein.

Die Kristallschicht wird demnach nach einem Auskristallisieren des aus dem Einsatz zu gewinnenden Produkts in einer an Wärmetauschflächen wachsenden vertikalen Kristallschicht und nach einem allfälligen Ablassen flüssig verbliebener unreiner Fraktionen geschwitzt, indem die gesamte Wärmetauschfläche über die Schmelztemperatur des zu gewinnenden Produkts erwärmt wird. Bis zum Erreichen der Schmelztemperatur der Kristallschicht erfolgt das Schwitzen herkömmlich durch Wärmefluss vom Wärmetauscher direkt auf die an der Wärmetauschfläche anliegende Kristallschicht. Danach wird die Temperatur über den Schmelzpunkt der Kristallschicht erhöht. In der Folge wird eine die Wärmetauschfläche berührende Grenzschicht der Kristallschicht ganzflächig abgeschmolzen. Die verflüssigte Phase fliesst ab. Zwischen der Kristallschicht und der Wärmetauschfläche bildet sich dadurch ein durchgehender Zwischenraum, der sich mit Gas oder Luft füllt. Ist dieser Zwischenraum durchgehend vorhanden, kann die Temperatur der Wärmetauschfläche weiter angehoben und die Kristallschicht mittels Wärmestrahlung geschwitzt werden. Dazu ist es notwendig, dass die Kristallschicht stabil ist, d.h. weder kippt noch bricht, noch in sich zusammensinkt. Dieses Strahlungsschwitzen ermöglicht kürzere Schwitzzeiten als ein Schwitzen mit Wärmetauschertemperaturen unter dem Schmelzpunkt der zu gewinnenden Substanz. Wenn keine Gefahr besteht, dass eine sich vom Wärmetauscher lösende Kristallschicht kippt oder abrutscht, kann die Wärmezufuhr relativ hoch dosiert werden.

Dies wird damit erklärt, dass die Wärmeübertragung über die Wärmestrahlung sehr gleichmässig erfolgt. Unterschiede im Abstand der Kristallschicht von der Wärmetauschfläche sind, da die Wärmeübertragung durch Wärmestrahlung erfolgt, von wesentlich geringerem Einfluss auf die übertragene Energiemenge pro Flächeneinheit als die Unterschiede bei einer sich lediglich teilweise von der Wärmetauschfläche lösenden Kristallschicht. Für Wärmestrahlung ist die Entfernung von der Strahlungsquelle von untergeordneter Bedeutung, hingegen kann eine Kristallschicht, die die Wärmetauschfläche teilweise berührt lediglich mit Temperaturen unter dem Schmelzpunkt der Kristallschicht geschwitzt werden, wenn ein Abschmelzen der Kristallschicht ausbleiben soll. Auf die nicht berührenden Anteile der Kristallschicht kann nur eine wesentlich geringere Energiemenge übertragen werden als auf die anliegenden. Die Wärmeabgabe durch Strahlung erfolgt hingegen auf der gesamten Wärmetauschfläche gleichmässig.

Damit die Kristallschichten in einem praktisch konstanten Abstand zu den Wärmetauschflächen stehen bleiben, werden sie auf mechanische Weise gegenüber den Wärmetauschflächen fest positioniert und stabilisiert, so dass weder ein Wegkippen noch ein Brechen der Kristallschicht auftritt.

Vorteilhaft kann die Kristallschicht derart auskristallisiert werden, dass nebeneinander stehende, zusammenhängende vertikale Kristallscheiben ein räumliches Gebilde formen, welches eine gegenüber der Stärke der Kristallscheibe wesentlich grössere, für die gesamte Kristallschicht statisch wirksame Standfläche aufweist. Dadurch kann erreicht werden, dass die von der Wärmetauschfläche gelöste Kristallschicht mit Abstand zur Wärmetauschfläche stehen bleibt. Eine lediglich der Stärke der Kristallschicht entsprechende Standfläche, wie sie bei grossen, ebenen Kristallscheiben auftritt, vermag dieser nicht genügen Halt zu geben. Eine ein räumliches Gebilde bildende Kristallschicht weist hingegen vertikal gerichtete Kanten oder Rundungen auf, die die Kristallschicht versteifen und ihre Knicklänge erhöhen. Dies erlaubt den Bau von höheren Kristallisatoren.

Vorteilhaft kann die Kristallschicht durch Einbauten im Kristallisator parallel zur Wärmetauschfläche gehalten werden. Diese Einbauten können alternativ oder zusätzlich zur räumlichen Form der Kristallschicht vorgesehen sein. Die Einbauten dürfen nicht in thermischem Kontakt zur Wärmetauschfläche stehen, welche sie übermässig erwärmen würden, sondern weisen die Temperatur der Kristallschicht auf und werden zumindest teilweise von der Kristallschicht umschlossen. Die Einbauten stabilisieren die Kristallschicht, so dass diese weder gegen die Wärmetauschfläche kippt noch in vertikal übereinander liegende Teil zerbricht. Die Einbauten teilen die Kristallschicht vorteilhaft in relativ schmale, vertikale Streifen auf, die in sich genügend stabil sind, um zusammen mit den Einbauten vertikal stehen zu bleiben. Dies Streifen können miteinander verbunden sein.

Wenn auch der Einsatz gänzlich verfestigt werden kann, um anschliessend fraktioniert geschwitzt zu werden, erfolgt vorteilhaft bereits die Kristallisation fraktioniert, so dass eine flüssig verbleibende Fraktion übrigbleibt und möglicherweise schon vor dem Schwitzen abgelassen werden kann.

Der erfindungsgemässe Kristallisator ist nicht auf einen Kristallisatortypus beschränkt. Es sind im Wesentlichen alle bekannten Typen verwendbar, um das erfindungsgemässe Verfahren durchzuführen. In einem statischen Kristallisator zur Reinigung eines Einsatzes aus einer mit wenigstens einer niedrigerschmelzenden Fraktion verunreinigten, in einer selbsttragenden Kristallschicht auskristallisierbaren Substanz, welcher mit wenigstens einer Wärmetauschfläche, insbesondere einem Plattenwärmetauscher, und Einbauten im Bereich der Kristallschicht ausgerüstet ist, erfolgt die Reinigung des Einsatzes nach dem beschriebenen Verfahren. Bei einem solchen Kristallisator sind erfindungsgemäss im Bereich der Kristallschicht sich mit der Kristallschicht verbindende und diese versteifende Einbauten in einem Abstand zur Wärmetauschfläche angeordnet.

Auch bei einem Fallfilmkristallisator kann das erfindungsgemässe Verfahren angewendet werden. Damit die Distanz wischen Kristallschicht und Wärmetauschfläche konstant gehalten ist und die Kristallschicht vor Knicken oder Kippen geschützt ist, sind auch in einem Fallfilmkristallisator vorteilhaft Stabilisationselemente eingebaut, welche thermisch von der Wärmetauschfläche getrennt sind und von der Kristallschicht wenigstens teilweise umschlossen werden. Die Form der Wärmetauschflächen kann sowohl bei statischer wie auch dynamischer Kristallisation ebenflächig oder rohrförmig sein. Nahezu sämtliche bekannten Wärmetauscher und Kristallisatoren können eingesetzt werden. Dazu kann es allenfalls notwendig oder zumindest zweckmässig sein, Einbauten zwischen die Wärmetauschflächen einzubauen.

Es können Kristallisatoren gebaut werden, bei denen z.B. Plattenwärmetauscher so schmal gebaut sind, dass die um die vertikalen Enden des Plattenwärmetauschers herumreichende Kristallschicht der sich parallel zu den Plattenwärmetauschern erstreckenden Kristallschicht genügend Steifigkeit verleiht, dass diese während der Schwitzphase weder kippt noch bricht. Dieser Effekt ist auch z.B. mit vertikalen Rohren, Rohrbündeln oder vertikalen Längsrippenrohrbündeln ausgestatteten Kristallisatoren erreichbar. Damit bewährte, grossflächige Plattenkristallisatoren verwendet werden können, bzw. die Höhe der Wärmetauschflächen und Kristallschichten vergrössert werden kann, müssen parallel zur Wärmetauschfläche jedoch Einbauten vorgesehen werden. Diese müssen sich mit der Kristallschicht verbinden, um ihr einen genügenden Halt geben zu können. Sie müssen in einem Abstand zur Wärmetauschfläche angeordnet sein, damit keine thermische Verbindung zu dieser besteht. Das Schwitzen mit gegenüber der Schmelztemperatur der zu gewinnenden Substanz erhöhter Temperatur der Wärmetauschfläche würde sonst zu einem Ablösen der Kristallschicht von der erwärmten Einbaute führen und damit deren Stützfunktion verunmöglichen.

Die Einbauten sind vorteilhaft lineare Vertikalelemente, welche die Kristallschicht in schmale vertikale Streifen unterteilen und diese Streifen seitlich stabilisieren. Das Vertikalelement besitzt vorteilhaft einen sich etwa senkrecht zur Kristallschicht erstreckenden Steg zur Versteifung des Vertikalelements. Ein zwischen zwei parallelen Plattenwärmetauschern angeordnetes Vertikalelement ist in Bezug auf eine Mittelebene zwischen den beiden Oberflächen benachbarter Plattenwärmetauscher vorteilhaft symmetrisch ausgebildet.

Vorteilhaft weist die Einbaute eine von der Kristallschicht umschliessbare vertikale Kante auf. Dies ergibt einen Formschluss zwischen Kristallschicht und Einbaute, welche beim Schwitzen die Kristallschicht sowohl vor Knicken als auch vor Kippen schützt, jedoch beim Abschmelzen des Endprodukts die Kristallschicht senkrecht abrutschen lässt.

Die Einbaute besitzt mit Vorteil eine der Wärmetauschfläche zugewandte, den Bereich der Kristallschicht wenigstens teilweise schräg querende, vertikale Flanke. Diese kann ebenflächig, gewölbt oder z.B. abgestuft ausgebildet sein. Sie reicht von einer ersten Stelle nahe der Wärmetauschfläche zu einer zweiten, von der ersten horizontal und parallel zur Wärmetauschfläche beabstandeten zweiten Stelle mit grösserem Abstand zur selben Wärmetauschfläche. Zwei solche Flanken sind zweckmässigerweise derart angeordnet, dass zwischen den vertikalen Flankenrändern mit dem grösseren Abstand zur Wärmetauschfläche sich ein Kristallschicht-Streifen erstrecken kann. Die Kristallschicht bildet entlang dieser Flanke eine Art Keil, welcher eine durch Temperaturunterschiede bedingte Veränderung der Abmessungen der Kristallschicht zulässt und eine Halterung der Kristallschicht sicherstellt. Die Neigung der Flanke in Bezug zur Wärmetauschfläche ist bei linearen Vertikalelementen möglichst gross auszubilden, damit die Flanke auch bei unpräzisem Einbau des Vertikalelements zwischen zwei ebenen Wärmetauschflächen eine Neigung gegenüber der Ebene der Wärmetauschfläche aufweist und mit Sicherheit die Wärmetauschfläche nicht berührt.

Vorteilhaft weist die Einbaute wenigstens eine von der Kristallschicht umschliessbare Kralle auf. Diese Kralle sichert die Kristallschicht zusätzlich. Die Kralle ist mit Vorteil durch Umbiegen der von der Kristallschicht umschliessbaren Kante gebildet. Dies behindert in der Folge das senkrechte Abrutschen der Kristallschicht nicht, verhindert jedoch eine Bewegung der Kristallschicht in eine andere als vertikale Richtung.

Die Erfindung wird nun anhand von in den Figuren dargestellten Ausführungsbeispielen genauer erläutert. Es zeigt
- Figur 1:: einen schematischen Vertikalschnitt durch einen mit linearen Vertikalelementen bestückten, erfindungsgemässen Kristallisator,
- Figur 2:: einen schematischen Horizontalschnitt durch den Kristallisator gemäss Figur 1,
- Figur 3:: einen schematischen Horizontalschnitt durch zwei Vertikalelemente mit schwitzenden Kristallschichten
- Figuren 4 bis 9:: Schnittzeichnungen von unterschiedlichen linearen Vertikalelementen,
- Figur 10:: einen Horizontalschnitt durch einen Fallfilmkristallisator,
- Figuren 11 bis 18:: Schnittzeichnungen von Kristallisationsrohren eines Fallfilmkristallisators gem. Figur 10 mit unterschiedlichen Einbauten.

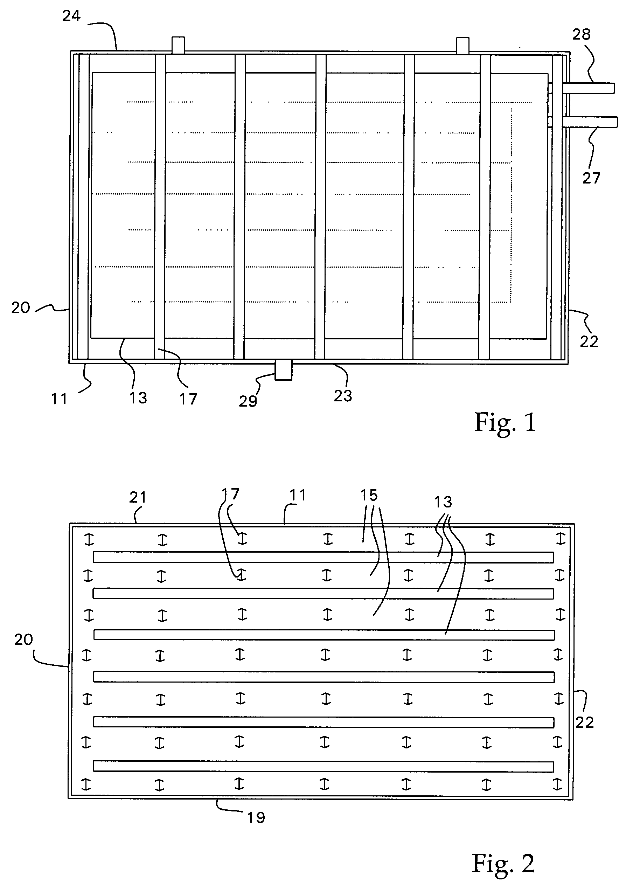

Im statischen Kristallisator gemäss **Figuren 1 und 2** sind innerhalb des Gehäuses 11 eine Serie von Plattenwärmetauschern 13 angeordnet. Die Plattenwärmetauscher 13 sind in bekannter Art in regelmässigen Abständen parallel zueinander angeordnet und teilen den Kristallisatorraum in parallele Zwischenräume 15 zwischen den Plattenwärmetauschern 13. Die Umfassungswände 19,20,21,22 des Behälters können auch als Wärmetauschflächen ausgerüstet sein. In diesen Zwischenräumen 15 sind etwa vertikal ausgerichtete lineare Stabilisierungselemente 17 angeordnet. Die Zwischenräume 15 umschliessen die Stabilisierungselemente 17. Daher stehen die Stabilisierungselemente 17 in keinem thermischen Kontakt zu den Plattenwärmetauschern 13. Sie sind z.B. an Boden 23 und Decke 24 des Gehäuses 11 befestigt.

Erfindungsgemäss wird der Kristallisator folgendermassen betrieben: Durch die Einlässe 25,26 wird ein flüssiger Einsatz in das Gehäuse 11 eingefüllt, welcher in der Folge die Zwischenräume 15 ausfüllt. Der Einsatz besteht wenigstens aus einer zu gewinnenden Substanz und einer diese verunreinigenden Substanz mit niedrigerem Schmelzpunkt. Durch den Vorlauf 27 wird ein Wärmetransportmedium, in der Regel Wasser, dem Wärmetauscher 13 zugeleitet. In dessen Innenraum durchfliesst dieses den Wärmetauscher und kühlt dessen Oberfläche unter den Schmelzpunkt des zu gewinnenden Produkts ab. Über den Rücklauf 28 fliesst das erwärmte Wärmetransportmedium zurück in eine nicht dargestellte Heizungs/Kühlungs-Anlage, in der es auf die gewünschte Temperatur gebracht wird, um von neuem durch die Wärmetauscher geschickt zu werden.

Die zu gewinnende Substanz mit höherem Schmelzpunkt kristallisiert in der Folge an den Oberflächen der Wärmetauscher 13 als Kristallschicht aus. Bei hoher Reinheit des Einsatzes ist die Reinheit der Kristallschicht ebenfalls sehr hoch. Eine solche Kristallschicht ist häufig statisch belastbar. Bei geeigneter Höhe des Kristallisators ist die Kristallschicht selbsttragend, so dass sie gelöst von der Oberfläche des Wärmetauschers 13 auf dem Boden 23 des Gehäuses 11 stehen kann. Im dargestellten Kristallisator sind lineare, vertikal ausgerichtete Stabilisierungselemente 17 in den Bereichen angeordnet, in denen die Kristallschicht wächst. Die Kristallschicht schliesst deshalb die Stabilisierungselemente 17 weitgehend ein. Dadurch wird die Kristallschicht stabilisiert und kann umso höher ausgebildet werden, ohne Gefahr zu laufen, dass sie Kippen oder Brechen könnte.

Die niedriger schmelzende verunreinigende Substanz wird vorteilhaft nicht auskristallisiert. Sie bleibt deshalb flüssig und kann über einen Bodenablauf 29 abgelassen werden. In der Kristallschicht eingeschlossene niedrigschmelzende Verunreinigungen werden dann aus der Kristallschicht geschwitzt. Dazu wird die Temperatur des Wärmetauschermediums erhöht. Diese Temperatur wird nun erfindungsgemäss über die Schmelztemperatur der zu gewinnenden Substanz angehoben.

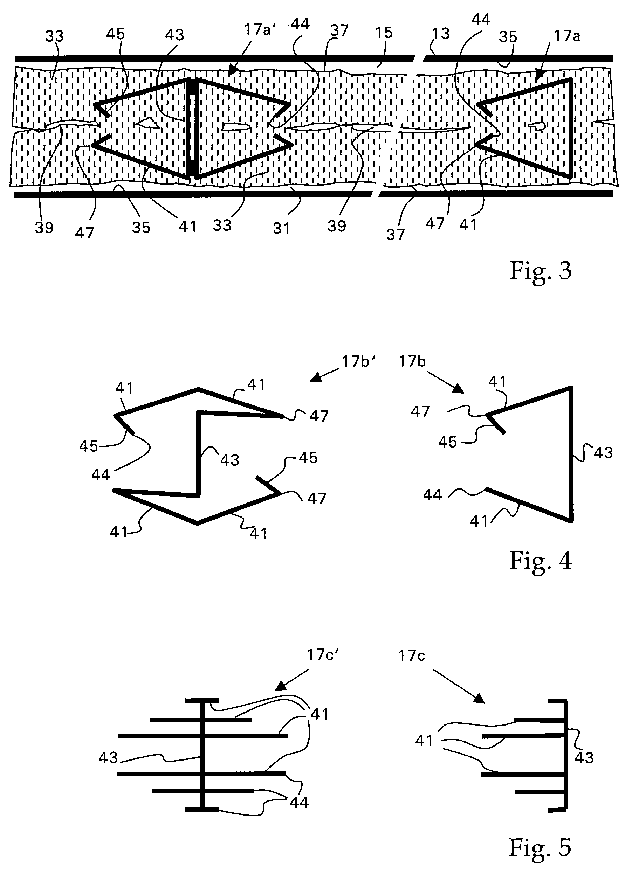

Unter diesen Umständen müsste die Kristallschicht eigentlich abgeschmolzen werden. Es wird aber lediglich eine Grenzschicht der Kristallschicht geschmolzen, welche in Berührung mit der Oberfläche des Wärmetauschers 13 steht. Die geschmolzene Substanz fliesst ab. Es entsteht dabei, wie in **Figur 3** dargestellt, ein Abstand oder Spalt 31 zwischen der Kristallschicht 33 und der Wärmetauschfläche 35 des Wärmetauschers 13. Damit die abgeflossene verflüssigte Substanz sich nicht sammelt und dadurch die Kristallschicht an ihrem unteren Ende abschmilzt, wird die Flüssigkeit abgelassen. Der Spalt 31 füllt sich daher mit Luft oder einem anderen in das Gehäuse 11 zugeführten Gas oder Gasgemisch. Die Kristallschicht 33 ist nun, zumindest in der Theorie, vollflächig von der Wärmetauschfläche 35 getrennt. Der Energietransfer von den Wärmetauschern 13 auf die Kristallschicht 33 kann nur noch über Wärmestrahlung und etwas Wärmekonvektion erfolgen. Da der Abstand der Wärmetauschfläche 35 von der angeschmolzenen Oberfläche 37 der Kristallschicht 33 gering ist, kann die Konvektion als vernachlässigbar angenommen werden.

Die Temperatur des Wärmetransportmediums wird nun noch weiter über den Schmelzpunkt der Kristallschicht 33 angehoben. Unter dem Einfluss der Strahlungswärme schwitzt nun die Kristallschicht 33. Das Ausgeschwitzte tritt als Flüssigkeit über die angeschmolzene Oberfläche 37 und allenfalls auch über eine Oberfläche, welche einen möglicherweise frei bleibenden inneren Hohlraum 39 zwischen zwei einander entgegenwachsenden Kristallschichten begrenzt, aus der Kristallschicht heraus und fliesst ab.

Nach dieser Schwitzphase werden die Abläufe 29 des Gehäuses verschlossen und die Temperatur im Gehäuse 11 angehoben. Das abschmelzende Produkt sammelt sich am Grund des Gehäuses und schmilzt dort die Kristallschichten 33 ab. Auch die mit dieser Schmelze in Kontakt stehenden Stabilisationselemente 17 erwärmen sich. Beides nimmt der Kristallschicht ihre statische Stabilität. Die Kristallschicht 33 rutscht an den Stabilisationselementen 17 entlang hinunter und schmilzt rasch in der gesammelten Schmelze. Das gereinigte Produkt, welches diese Schmelze bildet, wird anschliessend in separate Behälter geleitet und so gewonnen.

In **Figur 3** ist ein erstes Ausführungsbeispiel von Stabilisationselementen 17 dargestellt. Weitere Ausführungsbeispiele sind in den **Figuren 4 bis 9** dargestellt. Wesentlich an diesen Stabilisationselementen 17 ist, dass sie nicht in thermischem Kontakt mit den Wärmetauschern 13 stehen. Es ist dadurch gewährleistet, dass die Stabilisationselemente 17 in der Schwitzphase praktisch die gleiche Temperatur aufweisen, die auch die Kristallschicht 33 hat.

Weiter ist vorteilhaft, wenn auch nicht unbedingt erforderlich, dass die Stabilisationselemente 17 lineare Profile sind, die lediglich vertikal gerichtete Flächen aufweisen. Durchbrüche durch oder Einprägungen in diese Flächen, oder z.B. horizontal ausgerichtet Flächen würden ein Abrutschen der Kristallschicht 33 verhindern oder behindern und dadurch das Abschmelzen des Produkts verzögern. Eine lineare Ausführung von voneinander beabstandeten Stabilisationselementen 17 ist gegenüber einer die Zwischenräume praktisch ganz durchdringenden Struktur deshalb vorzuziehen, weil letztere mehr Volumen beansprucht und daher sowohl mehr Einsatz verdrängt als auch teurer in der Herstellung ist. Daher sind bei den Ausführungsbeispielen lediglich lineare Vertikalelemente mit lediglich vertikal ausgerichteten Profilflächen dargestellt.

Das Stabilisationselement 17 kann jeweils in einer zweiseitigen und einer einseitigen Ausführung vorliegen. Die zweiseitige Ausführung bietet den Kristallschichten links und rechts des Profils halt. Die einseitige Ausführung ist zur endständigen Stabilisierung der Kristallschicht gedacht.

Das Stabilisationselement 17a in **Figur 3** ist aus einer U-Schiene gebildet. Die beiden Schenkel 41 der U-Schiene laufen vom sie verbindenden Steg 43 aus aufeinander zu. An ihrer freien Biegekante 47 sind die Schenkel 41 nach innen zum Steg 43 hin zurückgebogen und bilden dadurch Krallen 45. Für ein zweiseitiges Profil 17a' sind zwei solche U-Schienen mit ihren Stegen 43 aneinander befestigt. Die freie Kante 44 beziehungsweise die ihr nahe Biegekante 47 liegen innerhalb des Bereichs der Kristallschicht 33 und werden in der Regel von dieser umwachsen.

Das Stabilisationselement 17b gemäss **Figur 4** ist dem Stabilisationselement 17a aus Figur 3 sehr ähnlich, besitzt jedoch lediglich an einem Schenkel 41 eine Kralle 45. Das zweiseitige Profil 17b'ist aus einem einzigen Blechstück durch Abbiegen geformt. Das Blech verläuft von einer Kralle 45 über einen Schenkel 41 zu einem zweiten Schenkel, von dessen freier Biegekante 47 um etwa Schenkellänge zurück, um von dort aus um 90° abgebogen einen Steg 43 zu bilden, an welchen die beiden anderen Schenkel 41 sich symmetrisch zu den ersten anschliessen.

In **Figur 5** ist ein Profil 17c mit einem Steg 43 und daran sechs parallelen Schenkeln 41 dargestellt, wobei die inneren Schenkel länger ausgebildet sind als die Äusseren. Beim zweiseitige Profil 17c' sind die Schenkel spiegelsymmetrisch zur Ebene des Stegs 43 ausgebildet.

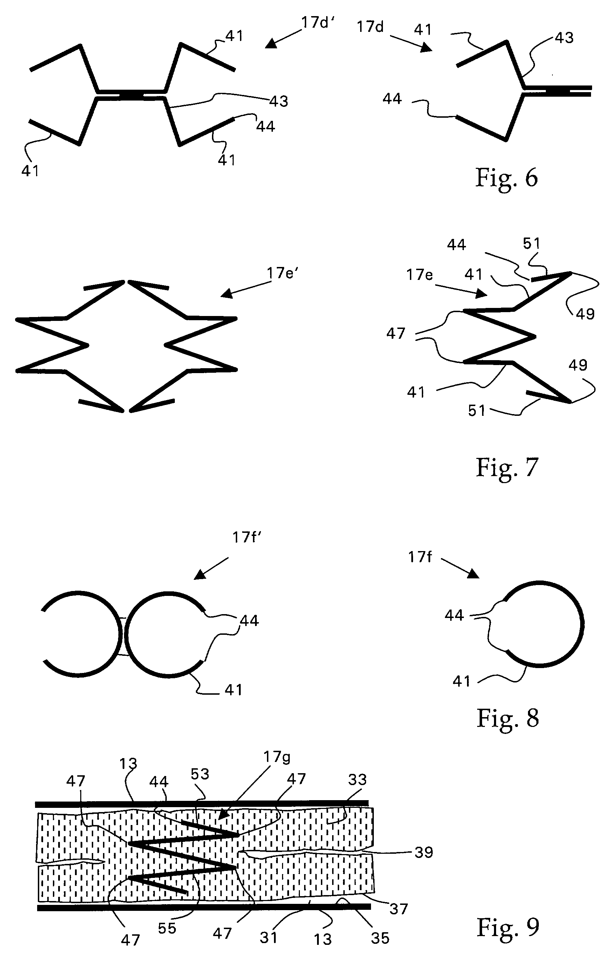

In **Figur 6** ist ein Stabilisationselement 17d dargestellt, das aus zwei Z-Profilen zusammengesetzt ist. Die Stege 43 der Z-Profile bilden zusammen die Breite des Stabilisationselements 17d. Die einen daran anschliessenden Flanken liegen flach aneinander und sind aneinander befestigt, die anderen Flanken bilden Schenkel 41, die von einer Kristallschicht eingewachsen werden können. Das zweiseitige Profil 17d' ist spiegelsymmetrisch verdoppelt.

Das in **Figur 7** dargestellte Stabilisierungselement 17e weist eine W-Form auf, wobei an die Enden 49 des W ein kurzer Schenkel 51 anschliesst. Die beiden freien Biegekanten 47 der Fusspunkte des W sind so ausgebildet, dass sie in die Kristallschicht 33 fallen. Die kurzen Schenkel 51 sind einander zugeneigt ausgebildet und bilden je eine freie Kante 44, welche von der Kristallschicht eingeschlossen wird. Die zweiseitige Ausführung 17e' ist aus zwei solchen Profilen 17e zusammengesetzt.

**Figur 8** zeigt ein Ausführungsbeispiel eines Stabilisierungselements 17f, welches aus einem aufgeschnittenen Rohr oder einem rund gebogenen Blechstück besteht. Das Profil 17f bildet ein kreisrundes C, dessen Öffnung etwa 90 Grad ausmacht. Zwei solcher Profile 17f können gegenüber ihren Öffnungen an ihren Rücken miteinander zu einem Profil 17f' verbunden werden. Die die Öffnung bildenden Kanten 44 kommen in die auskristallisierte Kristallschicht zu liegen.

Das in **Figur 9** dargestellte Profil 17g ist sowohl einseitig als auch zweiseitig zu verwenden. Es ist ein viermal abwechselnd jeweils in Gegenrichtung gefalteter Blechstreifen, dessen zwei äussersten Flanken 53 etwa halb so lang sind wie die drei dazwischen liegenden 55. Die Biegekanten 47 und die freien Kanten 44 bilden vom Kristallisat 33 umschliessbare Kanten, welche so einen gegen Knicken und Kippen schützenden Formschluss zwischen Kristallschicht 33 und Stabilisierungselement 17g ermöglichen.

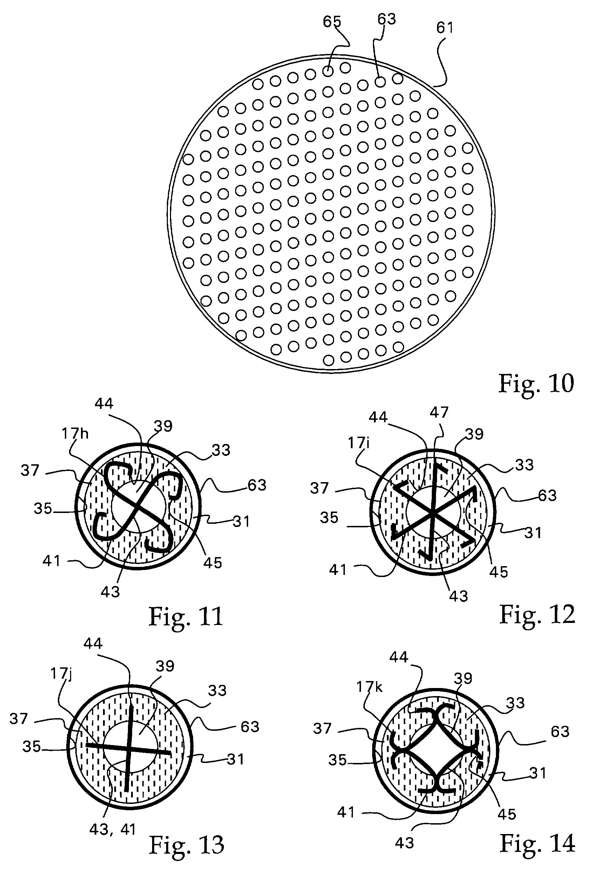

In **Figur 10** ist ein Horizontalschnitt durch einen dem Stand der Technik entsprechenden Fallfilmkristallisator dargestellt. Dieser besitzt ein Gehäuse 61 und darin ein Rohrbündel von Wärmetauscherrohren 63. In deren Innenraum 65 findet der Reinigungsvorgang statt. Die Erfindung ist jedoch auch auf Fallfilmkristallisatoren mit Plattenwärmetauschern anwendbar.

Der Einsatz wird als Sprühfilm oder Rieselfilm auf die innere Oberfläche 37 der Rohre 63 bzw. auf die innere Oberfläche der sich bildenden Kristallschicht 33 aufgebracht. Dort kristallisiert bei geeigneter Temperatur eine Kristallschicht 33 aus, die im Wesentlichen das zu gewinnende Produkt enthält. Die Temperatur wird über ein Wärmemedium auf der Aussenseite der Rohre 63 kontrolliert. Bei kurzen dicken Rohren kann die Kristallschicht unabhängig vom Wärmetauscherrohr 63 stehen. Fallfilmkristallisatoren werden aber sehr hoch gebaut. Dadurch muss die Kristallschicht ein Stabilisationselement umwachsen, um beim Schwitzen genügend stabil zu sein.

Solche Einbauten 17 sind in den Figuren 11 bis 17 dargestellt. Das Stabilisationselement 17h gemäss **Figur 11** weist eine Anzahl etwa auf der Rohrachse zusammenhängenden Krallen 45 auf. Die dargestellten vier Krallen 45 stossen rechtwinklig zusammen und bilden so ein axial angeordnetes Kreuz aus zwei sich kreuzenden Stegen 43. Die Krallen 45 sind rund gebogene Kreuzarme. Die Enden 44 der Kreuzarme weisen gegen die Stege 43 zurück. In diesem rund geformten Sonnenrad 17h ist die Kristallschicht 33 verankert. Sobald die Wärmetauschfläche 35 des Wärmetauschers 63 über den Schmelzpunkt der Kristallschicht angehoben wird, schmilzt die angrenzende Schicht ab und es bildet sich ein Spalt 31 zwischen Kristallschicht 33 und Wärmetauscheroberfläche 35. Die Kristallschicht 33 bleibt nun dank der Stabilität des Stabilisierungselements 17h stehen.

In **Figur 12** ist ein kantig gebogenes, sechsarmiges Sonnenrad als Stabilisierungselement 17i dargestellt. Die lediglich einfach abgebogenen Schenkel 41 weisen eine Biegekante 47 und eine Endkante 44 auf. Beide werden vom Kristallisat umschlossen. Innerhalb der runden Form der Kristallschicht 33 kann dieser einfach abgebogene Schenkel auch als Kralle 45 bezeichnet werden.

Das in **Figur 13** dargestellte Stabilisierungselement 17j ist ein rechtwinkliges Kreuzprofil. Die Enden der Arme bilden Kanten 44, die in die Kristallschicht 33 hineinragen. Die Arme bilden sowohl die Kristallschicht teilweise senkrecht querende Flanken 41 als auch Stege 43, die ein hohe Stabilität gewährleisten.

In **Figur 14** ist ein aus vier C-förmig gebogenen Profilen zusammengesetztes Stabilisationselement 17k dargestellt. Die C-förmigen Profile sind an jeweils zwei Stellen an ihren Rücken miteinander verbunden. Die Öffnungskanten des C bilden von der Kristallschicht umschliessbare, vertikal ausgerichtete Kanten 44.

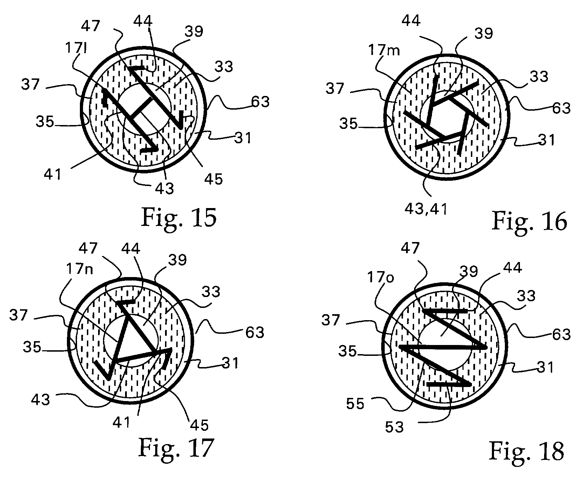

In **Figur 15** weist das Stabilisierungselement 171 eine H-Form auf, wobei die vier Enden des H umgebogen sind und Krallen 45 bilden. Der Quersteg und die beiden parallelen Flansche bilden sowohl stabilisierende Stege 43 als auch Schenkel 41.

In **Figur 16** ist ein aus sechs flachen Profilen zusammengesetztes Stabilisationselement 17m dargestellt. Die sechs Flachprofile sind zu einem regelmässigen sechseckigen Profilrohr verbunden, wobei die Flachprofile jeweils in einer Richtung über die Fügekanten des Sechseckprofils vorstehen. Die vorstehenden Teile bilden wiederum Schenkel 41 und Kanten 44, die der Kristallschicht Halt am Stabilisierungselement 17m geben.

In derselben Art ist das in **Figur 17** dargestellte Stabilisierungselement 17n zusammengesetzt, wobei drei L-förmige Profile im Dreieck zu einem sonnenradähnlichen Profil verbunden sind. Die drei L-Profile bilden zusammen ein Dreikantrohr. Die freien Biegekanten 47 und die freien Kanten 44 der L-Profile sind von der Kristallschicht 33 umwachsbar.

Die Kristallschicht verkrallt sich auch in einem Stabilisationselement 17o, wie es in **Figur 18** dargestellt ist. Dieses Element ist ein vierfach jeweils entgegengesetzt abgebogenes Profil. Die Biegekanten 47 und die Endkanten 44 bilden umwachsbare Kanten.

Allen Stabilisationselementen ist gemeinsam, dass sie keine Berührung zu den Wärmetauscheroberflächen aufweisen. Vorteilhaft sind es vertikal gestellte Profile mit lediglich vertikalen Flächen und Kanten. Ihre Steifigkeit ist durch Stege und Flansche möglichst hoch auszulegen. Sie weisen vertikale Kanten 44,47 auf, die innerhalb einer auskristallisierten Kristallschicht liegen.

## Patentansprüche

1. Verfahren zur Trennung eines Einsatzgemisches aus Substanzen oder Isomeren mit unterschiedlichen Schmelztemperaturen mittels Kristallisation und anschliessendem Schwitzen des Kristallisats (33), welches Einsatzgemisch ein zu gewinnendes Produkt enthält, das in einer statisch belastbaren Kristallschicht (33) auskristallisierbar ist, **dadurch gekennzeichnet, dass** das Kristallisat (33) dergestalt auskristallisiert wird, dass es eine vertikale, in einem von der Wärmetauschfläche (35) gelösten Zustand stabile Kristallschicht (33) bildet, und dass die Temperatur der gesamten Wärmetauschfläche (35) zum Schwitzen der Kristallschicht über die Schmelztemperatur des zu gewinnenden Produkts angehoben wird.

2. Verfahren nach Anspruch 1, **dadurch gekennzeichnet**, die Kristallschicht (33) dergestalt auskristallisiert wird, dass nebeneinander stehende, zusammenhängende vertikalen Kristallscheiben (33) ein räumliches Gebilde formen, welches eine gegenüber der Stärke der Kristallscheibe (33) wesentlich grössere, für die gesamte Kristallschicht (33) statisch wirksame Standfläche aufweist.

3. Verfahren nach Anspruch 1 oder 2, **dadurch gekennzeichnet, dass** die Kristallschicht (33) durch Stabilisierungselemente (17) parallel zur Wärmetauschfläche (35) stabilisiert wird.

4. Verfahren nach einem der Ansprüche 1 bis 3, **dadurch gekennzeichnet, dass** die Kristallisation fraktioniert erfolgt.

5. Kristallisator zur Trennung eines Einsatzgemisches aus Substanzen oder Isomeren mit unterschiedlichen Schmelztemperaturen mittels Kristallisation und anschliessendem Schwitzen des Kristallisats, welches Einsatzgemisch ein zu gewinnendes Produkt enthält, welches auf einer Wärmetauschfläche (35) in einer statisch belastbaren Kristallschicht auskristallisierbar ist, mit Wärmetauschflächen (35) und Einbauten (17) im Bereich der Kristallschicht (33), **dadurch gekennzeichnet, dass** die Einbauten thermisch von der Wärmetauschfläche (13,63) getrennt sind.

6. Kristallisator nach Anspruch 5, **dadurch gekennzeichnet, dass** die Einbauten (17) in einem Abstand zur Wärmetauschfläche (35) angeordnete lineare Vertikalelemente sind.

7. Kristallisator nach Anspruch 6, **dadurch gekennzeichnet, dass** das Vertikalelement (17) einen sich etwa senkrecht zur Kristallschicht (33) erstreckenden Steg zur Versteifung des Vertikalelements (17) aufweist.

8. Kristallisator nach Anspruch 6 oder 7, **dadurch gekennzeichnet, dass** ein zwischen zwei ebenen Wärmetauschflächen (35) angeordnetes Vertikalelement (17) in Bezug auf eine Mittelebene zwischen den zwei benachbarten, ebenen Wärmetauschflächen (35) symmetrisch ausgebildet ist.

9. Kristallisator nach einem der Ansprüche 5 bis 8, **dadurch gekennzeichnet, dass** das Stabilisierungselement (17) eine den Bereich der Kristallschicht (33) wenigstens teilweise querende vertikale Flanke (41,51,53,55) aufweist.

10. Kristallisator nach einem der Ansprüche 5 bis 9, **dadurch gekennzeichnet, dass** das Stabilisierungselement (17) eine von der Kristallschicht (33) umschliessbare vertikale Kante (44,47) aufweist.

11. Kristallisator nach einem der Ansprüche 5 bis 10, **dadurch gekennzeichnet, dass** das Stabilisierungselement (17) eine von der Kristallschicht (33) umschliessbare Kralle (45) aufweist.
